# EUROPÄISCHE PATENTANMELDUNG

(11) **EP 4 230 503 A1**
(43) Veröffentlichungstag der Anmeldung: **23.08.2023**
(21) Anmeldenummer: 23153754.9
(22) Anmeldetag: 27.01.2023
(51) Int. Cl.: B62D 5/00

(54) **STEER-BY-WIRE-LENKSYSTEM, STEUERGERÄT UND VERFAHREN ZUM BETREIBEN EINES STEER-BY-WIRE-LENKSYSTEMS**

(30) Priorität: 18.02.2022 DE 102022201729
(71) Anmelder: VOLKSWAGEN AG, 38440 Wolfsburg (DE)
(72) Erfinder: Dreyer, Dirk, 31655 Stadthagen (DE)

(57) **Zusammenfassung**

Die Erfindung betrifft ein Steer-by-Wire-Lenksystem (1), umfassend ein Lenksäulenmodul (2) und ein Lenkgetriebe (3), wobei das Lenksäulenmodul (2) mindestens ein Lenkrad (4), eine Lenksäule (10), mindestens einen Drehwinkelsensor (5), mindestens einen Aktor (8) zur Erzeugung eines Gegenmoments an dem Lenkrad (4) sowie mindestens ein Steuergerät (7) zur Ansteuerung des Aktors (8) aufweist, wobei das Steuergerät (7) einen Mikroprozessor (11) und eine Leistungselektronik (12) aufweist, wobei das Steuergerät (7) derart ausgebildet ist, anhand der Daten eines Rotorlagesensors des Aktors (8) einen Lenkradwinkel (ϕ_{L}) zu bestimmen, wobei ein Mikroprozessor (15) des Drehwinkelsensors (5) in dem Steuergerät (7) angeordnet ist, wobei der Mikroprozessor (15) des Drehwinkelsensors (5) den Lenkradwinkel (ϕ_{L}) über eine direkte Datenverbindung (16) dem Mikroprozessor (11) für den Aktor (8) übermittelt, wobei der Mikroprozessor (15) des Drehwinkelsensors (5) und der Mikroprozessor (11) für den Aktor (8) den Lenkradwinkel (ϕ_{L}) auf einen ersten Fahrzeugbus (20) übertragen und der Mikroprozessor (11) für den Aktor (8) den Lenkraddrehwinkel (ϕ_{L}) direkt über eine separate Datenleitung (18) an das Lenkgetriebe (3) übermittelt, wobei das Lenkgetriebe (3) mit dem ersten Fahrzeugbus (20) verbunden ist, ein Steuergerät (7) und ein Verfahren.

## Beschreibung

Die Erfindung betrifft ein Steer-by-Wire-Lenksystem, ein Steuergerät und ein Verfahren zum Betreiben eines Steer-by-Wire-Lenksystems.

Steer-by-Wire-Lenksysteme weisen ein Lenksäulenmodul und ein Lenkgetriebe auf, die mechanisch entkoppelt sind. Das Lenksäulenmodul umfasst typischerweise ein Lenkrad, eine Lenksäule, einen Drehwinkelsensor, mindestens einen Aktor zur Erzeugung eines Gegenmoments an dem Lenkrad sowie mindestens ein Steuergerät zur Ansteuerung des Aktors. Unter einem Lenkrad wird dabei allgemein eine Lenkhandhabe verstanden. Der Aktor, der auch als Force-Feedback-Aktuator bezeichnet wird, ist ein Elektromotor, der gegebenenfalls über ein Getriebe mit der Lenksäule gekoppelt ist. Mittels des Aktors wird dabei nicht nur ein Gegenmoment am Lenkrad erzeugt, sondern auch das Lenkrad in Richtung einer Neutralstellung zurückgedreht, falls kein Handmoment auf das Lenkrad aufgebracht wird.

Aus der DE 10 2018 212 610 A1 ist ein Lenksäulenmodul für ein Steer-by-Wire-Lenksystem eines Fahrzeugs bekannt, umfassend einen Force-Feedback-Aktuator, eine Sensoreinheit zum Erfassen eines Betriebsparameters des Fahrzeugs und eine Steuereinheit, wobei das Lenksäulenmodul als ein einzeln handhabbares Modul am Fahrzeug befestigbar ist.

Dabei ist es wünschenswert, dass der Lenkradwinkel als ein Stellsignal für das Lenkgetriebe redundant an das Lenkgetriebe übertragen wird, um so die Ausfallsicherheit eines Steer-by-Wire-Lenksystems zu verbessern.

Der Erfindung liegt das technische Problem zugrunde, ein Steer-by-Wire-Lenksystem zu schaffen, bei dem der Lenkradwinkel redundant an ein Lenkgetriebe übermittelt werden kann. Ein weiteres technisches Problem ist die Schaffung eines Steuergerätes für einen Aktor sowie das Zurverfügungstellen eines geeigneten Verfahrens zum Betreiben eines Steer-by-Wire-Lenksystems.

Die Lösung des technischen Problems ergibt sich durch ein Steer-by-Wire-Lenksystem mit den Merkmalen des Anspruchs 1, ein Steuergerät mit den Merkmalen des Anspruchs 7 sowie ein Verfahren mit den Merkmalen des Anspruchs 8. Weitere vorteilhafte Ausgestaltungen der Erfindung ergeben sich aus den Unteransprüchen.

Das Steer-by-Wire-Lenksystem umfasst ein Lenksäulenmodul und ein Lenkgetriebe. Das Lenksäulenmodul weist mindestens ein Lenkrad, eine Lenksäule, mindestens einen Drehwinkelsensor, mindestens einen Aktor zur Erzeugung eines Gegenmoments an dem Lenkrad sowie mindestens ein Steuergerät zur Ansteuerung des Aktors auf. Das Steuergerät weist einen Mikroprozessor und eine Leistungselektronik auf, wobei das Steuergerät derart ausgebildet ist, anhand der Daten eines Rotorlagesensors des Aktors einen Lenkradwinkel zu bestimmen. Ist der Aktor über ein Getriebe mit der Lenksäule gekoppelt, so benötigt der Mikroprozessor zusätzlich das Übersetzungsverhältnis, um aus der Rotorlage auf den Lenkradwinkel zu schließen. Weiter ist dem Drehwinkelsensor ein eigener separater Mikroprozessor zugeordnet, der im Steuergerät angeordnet ist. Dabei kann der Mikroprozessor für den Drehwinkelsensor auf einer separaten Platine angeordnet sein. Der Mikroprozessor für den Drehwinkelsensor ist dabei über eine direkte Datenverbindung mit dem Mikroprozessor des Aktors verbunden, über die der Mikroprozessor des Drehwinkelsensors den Lenkraddrehwinkel an den Mikroprozessor für den Aktor übermittelt. Dabei ist der Lenkradwinkel des Drehwinkelsensors ein absoluter Lenkradwinkel. Somit hat der Mikroprozessor für den Aktor zwei Lenkradwinkel, nämlich den Lenkradwinkel vom Mikroprozessor des Drehwinkelsensors und einen Lenkradwinkel anhand der Rotorlage des Aktors. Neben dem Übersetzungsverhältnis eines gegebenenfalls vorhandenen Getriebes erhält der Mikroprozessor gegebenenfalls noch die Daten eines Indexsensors, der die Anzahl vollständiger Umdrehungen angibt. Weiter ist das Steer-by-Wire-Lenksystem derart ausgebildet, dass sowohl der Mikroprozessor für den Aktor als auch der Mikroprozessor für den Drehwinkelsensor den Lenkradwinkel auf einen ersten Fahrzeugbus übertragen kann, wobei das Lenkgetriebe mit dem ersten Fahrzeugbus verbunden ist. Zusätzlich überträgt der Mikroprozessor für den Aktor den Lenkradwinkel über eine separate Datenleitung an das Lenkgetriebe. Die separate Datenleitung ist beispielsweise eine Private-CAN-Verbindung, wobei die Übertragungsgeschwindigkeit erheblich höher als auf dem Fahrzeugbus sein kann. Die Datenübertragung kann dabei auch verschlüsselt sein. Da der Mikroprozessor für den Drehwinkelsensor räumlich sehr dicht beim Mikroprozessor des Aktors ist, kann die Datenverbindung zwischen diesen ebenfalls sehr schnell sein. Somit erhält das Lenkgetriebe den Lenkradwinkel redundant über zwei unabhängige Datenverbindungen.

In einer Ausführungsform sind in dem Steuergerät ein zweiter Mikroprozessor und eine zweite Leistungselektronik angeordnet, die einen zweiten Aktor zur Erzeugung eines Gegenmoments ansteuern, wobei der erste Mikroprozessor und der zweite Mikroprozessor datentechnisch verbunden sind, wobei der zweite Mikroprozessor derart ausgebildet ist, den Lenkradwinkel auf einen zweiten Fahrzeugbus zu übertragen. Hierdurch ist weitere Redundanz gegeben. Dabei kann vorgesehen sein, dass der zweite Aktor nur angesteuert wird, wenn der erste Aktor ausfällt. Es kann aber auch vorgesehen sein, dass die beiden Aktoren zeitgleich betrieben werden.

In einer weiteren Ausführungsform ist der Mikroprozessor des ersten Aktors derart ausgebildet, ein Indexsignal über volle Umdrehungen des Lenkrads zu empfangen.

In einer weiteren Ausführungsform sind der erste Aktor, der erste Mikroprozessor für den ersten Aktor und die erste Leistungselektronik mit einer ersten Spannungsversorgung und der zweite Aktor, der zweite Mikroprozessor für den zweiten Aktor und die zweite Leistungselektronik mit einer zweiten Spannungsversorgung verbunden.

In einer weiteren Ausführungsform ist der Mikroprozessor für den Drehwinkelsensor über ein Entkopplungsglied mit der Spannungsversorgung des ersten Mikroprozessors für den ersten Aktor verbunden, wobei zwischen Entkopplungsglied und Mikroprozessor ein Pufferspeicher angeordnet ist. Das Entkopplungsglied ist beispielsweise als Diode und der Pufferspeicher als Kondensator ausgebildet.

In einer weiteren Ausführungsform weist das Lenksäulenmodul mindestens einen Drehmomentsensor auf, mittels dessen das am Lenkrad anliegende Handmoment gemessen wird.

Hinsichtlich der Ausgestaltung des Steuergeräts sowie der verfahrensmäßigen Ausgestaltung wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild eines Steer-by-Wire-Lenksystems und
- Fig. 2: eine Teildarstellung einer Spannungsversorgung eines Mikroprozessors eines Drehwinkelsensors.

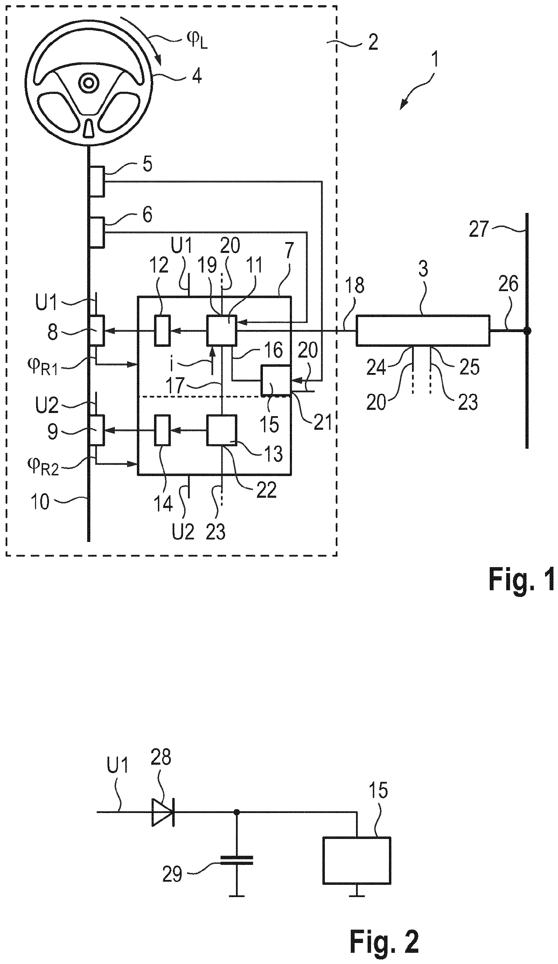

In der Fig. 1 ist ein schematisches Blockschaltbild eines Steer-by-Wire-Lenksystems 1 dargestellt, das ein Lenksäulenmodul 2 und ein Lenkgetriebe 3 aufweist. Das Lenksäulenmodul 2 weist ein Lenkrad 4, einen Drehwinkelsensor 5, einen Drehmomentsensor 6, ein Steuergerät 7, einen ersten Aktor 8 und einen zweiten Aktor 9 zur Erzeugung eines Gegenmoments am Lenkrad 4 sowie eine Lenksäule 10 auf. Das Steuergerät 7 weist einen ersten Mikroprozessor 11 und eine erste Leistungselektronik 12 auf, um den ersten Aktor 8 anzusteuern. Des Weiteren weist das Steuergerät 7 einen zweiten Mikroprozessor 13 und eine zweite Leistungselektronik 14 auf, um den zweiten Aktor 9 anzusteuern. Schließlich weist das Steuergerät 7 noch einen Mikroprozessor 15 des Drehwinkelsensors 5 auf, der die Sensorsignale des Drehwinkelsensors 5 in einen Lenkradwinkel ϕ_{L} umrechnet. Dabei ist der Mikroprozessor 15 über eine direkte Datenverbindung 16 mit dem ersten Mikroprozessor 11 verbunden. Weiter sind der erste Mikroprozessor 11 und der zweite Mikroprozessor 13 über eine weitere separate, direkte Datenverbindung 17 miteinander verbunden, über die sich die beiden Mikroprozessoren 11, 13 beispielsweise überwachen. Weiter ist dargestellt, dass die beiden Aktoren 8, 9 jeweils ihren Rotorlagewinkel ϕ_{R1} bzw. ϕ_{R2} an das Steuergerät 7 übertragen. Aus den Rotorlagewinkeln ϕ_{R1}, ϕ_{R2} sowie einem Übersetzungsverhältnis eines jeweils nicht dargestellten Getriebes zwischen Aktor 8 bzw. 9 und Lenksäule berechnet dann der jeweilige Mikroprozessor 11, 13 einen Lenkradwinkel. Hierzu erhalten die Mikroprozessoren 11, 13 noch ein Indexsignal I eines nicht dargestellten Indexsensors. Der erste Mikroprozessor 11 ist über eine separate direkte Datenleitung 18 mit dem Lenkgetriebe 3 verbunden. Weiter weist der erste Mikroprozessor 11 einen Anschluss 19 an einen ersten Fahrzeugbus 20 auf. Ebenso weist der Mikroprozessor 15 des Drehwinkelsensors 5 einen Anschluss 21 an den ersten Fahrzeugbus 20 auf. Entsprechend weist der zweite Mikroprozessor 13 einen Anschluss 22 an einen zweiten Fahrzeugbus 23 auf. Das Lenkgetriebe 3 weist ebenfalls einen Anschluss 24 an den ersten Fahrzeugbus 20 und einen Anschluss 25 für den zweiten Fahrzeugbus 23 auf. Dabei kann das Lenkgetriebe 3 zwei Steuereinheiten aufweisen, wobei die erste Steuereinheit mit dem ersten Fahrzeugbus und der Datenleitung 18 verbunden ist, wobei die zweite Steuereinheit mit dem zweiten Fahrzeugbus 23 verbunden ist. Das Lenkgetriebe 3 weist einen Rotor 26 auf, der mit einer Zahnstange 27 gekoppelt ist. Der erste Mikroprozessor 11, die erste Leistungselektronik 12, der erste Aktor 8 sowie der Mikroprozessor 15 des Drehwinkelsensors 5 sind mit einer ersten Spannungsversorgung U1 verbunden, wohingegen der zweite Mikroprozessor 13, die zweite Leistungselektronik 14 und der zweite Aktor 9 mit einer zweiten, unabhängigen Spannungsversorgung U2 verbunden sind. Entsprechend werden auch die redundanten Bauteile des Lenkgetriebes von den zwei Spannungsversorgungen U1, U2 versorgt.

Beim Start des Kraftfahrzeugs bestimmt der Mikroprozessor 15 den absoluten Lenkradwinkel ϕ_{L} und überträgt diesen einerseits an den ersten Mikroprozessor 11 und überträgt diesen auf den ersten Fahrzeugbus 20. Mittels des absoluten Lenkradwinkels ϕ_{L} vom Mikroprozessor 15 kann sich der erste Mikroprozessor 11 initialisieren, um aus dem Rotorlagewinkel ϕ_{R} den Lenkradwinkel ϕ_{L} zu bestimmen. Über die direkte, separate Datenleitung 18 übermittelt dann der erste Mikroprozessor 11 den Lenkradwinkel ϕ_{L} als Stellsignal an das Lenkgetriebe 3. Zusätzlich überträgt der erste Mikroprozessor 11 den Lenkradwinkel ϕ_{L} auch auf den ersten Fahrzeugbus 20. Somit ist sichergestellt, dass bei verschiedenen Einzelfehlern (z.B. defekte Datenleitung 18, defekter erster Fahrzeugbus) das Lenkgetriebe 3 stets einen Lenkradwinkel ϕ_{L} erhält. Da das Lenkgetriebe 3 zusätzlich den Lenkradwinkel ϕ_{L} vom zweiten Mikroprozessor 13 über den zweiten Fahrzeugbus 23 erhält, ist auch sichergestellt, dass bei Ausfall der ersten Spannungsversorgung U1 das Lenkgetriebe 3 einen Lenkradwinkel ϕ_{L} erhält. Dabei sei abschließend angemerkt, dass die Datenverbindungen 16, 17, 18 sehr viel schneller als die beiden Fahrzeugbusse 20, 23 sind.

In der Fig. 2 ist dargestellt, wie die erste Versorgungsspannung U1 über ein Entkopplungsglied 28 in Form einer Diode an den Mikroprozessor 15 des Drehwinkelsensors 5 geführt wird, wobei zusätzlich ein Pufferspeicher 29 in Form eines Kondensators vorgesehen ist. Somit kann der Mikroprozessor 15 auch bei einem Kurzschluss oder Ausfall der ersten Spannungsversorgung U1 noch für eine gewisse Zeit weiterarbeiten.

### Bezugszeichenliste

- 1: Steer-by-Wire-Lenksystem
- 2: Lenksäulenmodul
- 3: Lenkgetriebe
- 4: Lenkrad
- 5: Drehwinkelsensor
- 6: Drehmomentsensor
- 7: Steuergerät
- 8: Aktor
- 9: Aktor
- 10: Lenksäule
- 11: Mikroprozessor
- 12: Leistungselektronik
- 13: Mikroprozessor
- 14: Leistungselektronik
- 15: Mikroprozessor
- 16: Datenverbindung
- 17: Datenverbindung
- 18: Datenleitung
- 19: Anschluss
- 20: Fahrzeugbus
- 21: Anschluss
- 22: Anschluss
- 23: Fahrzeugbus
- 24: Anschluss
- 25: Anschluss
- 26: Rotor
- 27: Zahnstange
- 28: Entkopplungsglied
- 29: Pufferspeicher

## Patentansprüche

1. Steer-by-Wire-Lenksystem (1), umfassend ein Lenksäulenmodul (2) und ein Lenkgetriebe (3), wobei das Lenksäulenmodul (2) mindestens ein Lenkrad (4), eine Lenksäule (10), mindestens einen Drehwinkelsensor (5), mindestens einen Aktor (8) zur Erzeugung eines Gegenmoments an dem Lenkrad (4) sowie mindestens ein Steuergerät (7) zur Ansteuerung des Aktors (8) aufweist, wobei das Steuergerät (7) einen Mikroprozessor (11) und eine Leistungselektronik (12) aufweist, wobei das Steuergerät (7) derart ausgebildet ist, anhand der Daten eines Rotorlagesensors des Aktors (8) einen Lenkradwinkel (ϕ_{L}) zu bestimmen, wobei ein Mikroprozessor (15) des Drehwinkelsensors (5) in dem Steuergerät (7) angeordnet ist, wobei der Mikroprozessor (15) des Drehwinkelsensors (5) den Lenkradwinkel (ϕ_{L}) über eine direkte Datenverbindung (16) dem Mikroprozessor (11) für den Aktor (8) übermittelt, wobei der Mikroprozessor (15) des Drehwinkelsensors (5) und der Mikroprozessor (11) für den Aktor (8) den Lenkradwinkel (ϕ_{L}) auf einen ersten Fahrzeugbus (20) übertragen und der Mikroprozessor (11) für den Aktor (8) den Lenkraddrehwinkel (ϕ_{L}) direkt über eine separate Datenleitung (18) an das Lenkgetriebe (3) übermittelt, wobei das Lenkgetriebe (3) mit dem ersten Fahrzeugbus (20) verbunden ist.

2. Steer-by-Wire-Lenksystem, **dadurch gekennzeichnet, dass** in dem Steuergerät (7) ein zweiter Mikroprozessor (13) und eine zweite Leistungselektronik (14) angeordnet sind, die einen zweiten Aktor (9) zur Erzeugung eines Gegenmoments ansteuern, wobei der erste Mikroprozessor (11) und der zweite Mikroprozessor (13) datentechnisch verbunden sind, wobei der zweite Mikroprozessor (13) derart ausgebildet ist, den Lenkraddrehwinkel (ϕ_{L}) auf einen zweiten Fahrzeugbus (23) zu übertragen.

3. Steer-by-Wire-Lenksystem nach Anspruch 1 oder 2, **dadurch gekennzeichnet, dass** der erste Mikroprozessor (13) des ersten Aktors (8) derart ausgebildet ist, ein Indexsignal (I) über volle Umdrehungen des Lenkrades (4) zu empfangen.

4. Steer-by-Wire-Lenksystem nach einem der Ansprüche 2 oder 3, **dadurch gekennzeichnet, dass** der erste Aktor (8), der erste Mikroprozessor (11) für den ersten Aktor (8) und die erste Leistungselektronik (12) mit einer ersten Spannungsversorgung (U1) und der zweite Aktor (9), der zweite Mikroprozessor (13) für den zweiten Aktor (9) und die zweite Leistungselektronik (14) mit einer zweiten Spannungsversorgung (U2) verbunden sind.

5. Steer-by-Wire-Lenksystem nach einem der vorangegangenen Ansprüche, **dadurch gekennzeichnet, dass** der Mikroprozessor (15) für den Drehwinkelsensor (5) über ein Entkopplungsglied (28) mit der Spannungsversorgung (U1) des ersten Mikroprozessors (11) für den ersten Aktor (8) verbunden ist, wobei zwischen Entkopplungsglied (28) und Mikroprozessor (15) ein Pufferspeicher (29) angeordnet ist.

6. Steer-by-Wire-Lenksystem nach einem der vorangegangenen Ansprüche, **dadurch gekennzeichnet, dass** das Lenksäulenmodul (2) mindestens einen Drehmomentsensor (6) aufweist.

7. Steuergerät (7) für ein Steer-by-Wire-Lenksystem (1), wobei das Steuergerät (7) einen Mikroprozessor (11) und eine Leistungselektronik (12) aufweist, wobei das Steuergerät (7) derart ausgebildet ist, anhand der Daten eines Rotorlagesensors des Aktors (8) einen Lenkradwinkel (ϕ_{L}) zu bestimmen, wobei ein Mikroprozessor (15) des Drehwinkelsensors (5) in dem Steuergerät (7) angeordnet ist, wobei der Mikroprozessor (15) des Drehwinkelsensors (5) den Lenkradwinkel (ϕ_{L}) über eine direkte Datenverbindung (16) dem Mikroprozessor (11) für den Aktor (8) übermittelt, wobei der Mikroprozessor (11) für den Aktor (8) und der Mikroprozessor (15) für den Drehwinkelsensor (5) jeweils einen Anschluss (19, 21) für einen ersten Fahrzeugbus (20) aufweisen, wobei der Mikroprozessor (11) für den Aktor (8) zusätzlich einen Anschluss für eine direkte Datenleitung (18) zu einem Lenkgetriebe (3) aufweist.

8. Verfahren zum Betreiben eines Steer-by-Wire-Lenksystems (1), wobei das Steer-by-Wire-Lenksystem (1) ein Lenksäulenmodul (2) und ein Lenkgetriebe (3) aufweist, wobei das Lenksäulenmodul (2) mindestens ein Lenkrad (4), eine Lenksäule (10), mindestens einen Drehwinkelsensor (5), mindestens einen Aktor (8) zur Erzeugung eines Gegenmoments an dem Lenkrad (4) sowie mindestens ein Steuergerät (7) zur Ansteuerung des Aktors (8) aufweist, wobei das Steuergerät (7) einen Mikroprozessor (11) und eine Leistungselektronik (12) aufweist, wobei das Steuergerät (7) anhand der Daten eines Rotorlagesensors des Aktors (8) einen Lenkradwinkel (ϕ_{L}) bestimmt, wobei ein Mikroprozessor (15) des Drehwinkelsensors (5) in dem Steuergerät (7) angeordnet ist, wobei der Mikroprozessor (15) des Drehwinkelsensors (5) über eine direkte Datenverbindung (16) den Lenkradwinkel (ϕ_{L}) dem Mikroprozessor (11) des Aktors (8) übermittelt, wobei der Mikroprozessor (15) des Drehwinkelsensors (5) und der Mikroprozessor (11) für den Aktor (8) den Lenkradwinkel (ϕ_{L}) auf einen ersten Fahrzeugbus (20) übertragen und der Mikroprozessor (11) für den Aktor (8) den Lenkraddrehwinkel (ϕ_{L}) direkt über eine separate Datenleitung (18) an das Lenkgetriebe (3) übermittelt, wobei das Lenkgetriebe (3) mit dem ersten Fahrzeugbus (20) verbunden ist.
